# EUROPÄISCHE PATENTSCHRIFT

(11) **EP 1 071 622 B1**
(45) Veröffentlichungstag und Bekanntmachung des Hinweises auf die Patenterteilung: **03.03.2004**
(21) Anmeldenummer: 99920584.2
(22) Anmeldetag: 01.04.1999
(51) Int. Cl.: B65G 19/02, B61B 10/02, B65G 47/26

(54) **FÖRDERGUTTRÄGER**
SUPPORT FOR CONVEYOR GOODS
SUPPORT DE PRODUITS A TRANSPORTER

(30) Priorität: 15.04.1998 DE 19816688
(43) Veröffentlichungstag der Anmeldung: 31.01.2001
(73) Patentinhaber: WF Logistik GmbH, 86899 Landsberg (DE)
(72) Erfinder: GOSSNER, Anton, D-86161 Augsburg (DE)
(74) Vertreter: Tiesmeyer, Johannes, Dipl.-Phys. Dr.
(86) Internationale Anmeldenummer: PCT/EP1999/002237
(87) Internationale Veröffentlichungsnummer: WO 1999/052799

(56) Entgegenhaltungen:
- EP-A- 0 623 497
- US-A- 4 058 064

## Beschreibung

Die Erfindung betrifft einen Fördergutträger zum Transport von Fördergut längs einer Förderstrecke in einer Fördereinrichtung, insbesondere Hänge-Fördereinrichtung, die Laufschienen zur Führung von Fördergutträgern und ein längs der Laufschienen geführtes Antriebsband in Form eines Reibbandes zur Mitnahme der Fördergutträger längs der Förderstrecke aufweist, wobei jeder Fördergutträger einen Trägerkörper und daran wenigstens eine seitlich abstehende Laufrolle zur hängenden Abstützung und Führung des Fördergutträgers an einer Laufprofilfläche der Laufschienen der Fördereinrichtung und ein mit dem Reibband reibschlüssig in Antriebsverbindung zu bringendes Kopplungselement aufweist, wobei eine Reibfläche des mit seiner Laufrolle an der Laufprofilfläche hängend abgestützten Fördergutträgers dem Reibband gegenüberliegt, wobei die Fördergutträger ferner in wenigstens einem Staubereich der Fördereinrichtung bei weiterlaufendem Antriebsband staubar sind und jeweils eine unter Wirkung des Staudrucks aktivierbare Trenneinrichtung zum zeitweisen Lösen der Antriebsverbindung aufweisen, und wobei die Trenneinrichtung ein Betätigungselement aufweist, das im Falle eines Fördestaus von einem im Stau benachbarten Fördergutträger unter Staudruck betätigbar ist, um die Antriebsverbindung zu lösen.

Ein Fördergutträger und eine Fördereinrichtung der vorstehend genannten Art sind beispielsweise aus der EP-0 623 497 B1 bekannt. Bei diesen bekannten Fördergutträgern handelt es sich um sog. Bügelträger zum Transport von an Kleiderbügeln hängenden Kleidungsstücken in einer Hängefördereinrichtung. Der Bügelträger ist im Förderbetrieb mit einer von zwei symmetrisch zu seiner vertikalen Mittenebene von dem Trägerkörper abstehenden Laufrolle an einer Laufschiene der Fördereinrichtung seitlich angehängt, wobei die Laufrolle an einer Lauffläche der Schiene zur Bewegung in Schienenlängsrichtung geführt ist. Unterhalb der Laufrollen stehen symmetrisch zu der vertikalen Längs-Mittenebene zwei starre Vorsprünge seitlich von dem Trägerkörper ab, deren nach außen weisende Flächen als Reibflächen für einen Reibbandantrieb ausgebildet sind. Die jeweils der Laufschiene zugewandte Reibfläche steht im Förderbetrieb mit einem Reibband in Antriebsverbindung, das in einer Führung der Laufschiene in Schienenlängsrichtung verläuft. Das längs der Schiene bewegte Reibband nimmt den Fördergutträger über die reibschlüssige Kopplung zwischen Reibfläche und Reibband mit, wobei die an der Schiene geführte Laufrolle des Fördergutträgers an der Lauffläche der Laufschiene abrollt.

Bei der bekannten Hängefördereinrichtung handelt es sich um einen staufähigen power-and-free-Förderer, bei dem eine Gruppe von gleichartigen Fördergutträgern in einem Staubereich bei weiterlaufendem Reibband aufgestaut werden kann. Um zu vermeiden, daß die Reibflächen der im Stau befindlichen Fördergutträger an dem weiterlaufenden Reibband schleifen, weist der bekannte Fördergutträger eine Trenneinrichtung zum zeitweisen Lösen der Antriebsverbindung auf. Diese Trenneinrichtung umfaßt beidseitig der vertikalen Mittenebene jeweils eine seitlich von dem Trägerkörper abspreizbare Federzunge, die in einem größeren vertikalen Abstand von den Laufrollen unterhalb der Reibflächenvorsprünge vorgesehen sind. Im abgespreizten Zustand stützt sich die Federzunge an einer Anlagefläche der Laufschiene ab, wobei der Fördergutträger um einen geringen Betrag relativ zur Laufschiene derart verschwenkt wird, daß die Reibfläche von dem Reibband freikommt oder zumindest mit reduziertem Anlagedruck am Reibband anliegt. Das Abspreizen der Federzunge erfolgt unter der Wirkung des Staudrucks, wobei ein jeweils im Stau benachbarter Fördergutträger mit einem Spreizdorn die Federzunge nach außen in die Spreizstellung verdrängt. Ein Nachteil dieses bekannten Fördergutträgers liegt darin, daß vergleichsweise große Kräfte erforderlich sind, um den Bügelträger insgesamt so zu verschwenken, daß er im Stau zuverlässig vom Reibband freikommt. Insbesondere bei größerer Gewichtsbelastung durch das zu transportierende Fördergut sind die zum Freischalten des Bügelträgers erforderlichen Kräfte so groß, daß sie erst bei erheblichem Staudruck einer größeren Anzahl nachrückender Bügelträger aufgebracht werden können. Die Kräfte zum Freischalten, d.h. zum Verschwenken der Bügelträger relativ zur Laufschiene, sind auf Grund der Abhängigkeit von der Gewichtsbelastung des Fördergutträgers nicht sehr gut definierbar, so daß die bei Stau geforderte Abkopplung von dem Reibband nicht immer zuverlässig und häufig erst mit Verzögerung, also nach Aufbau eines hinreichend großen Staudrucks, erfolgt. Bei verzögerter oder unvollständiger Abkopplung des Fördergutträgers von dem Reibband besteht die Gefahr eines verstärkten Abriebes an der Reibfläche und einer starken Erhitzung durch Reibungswärme sowohl am Bügelträger als auch am Reibband. Ferner wird das Reibband durch das Schleifen der Reibflächen stärker belastet, so daß der Reibbandantrieb so dimensioniert sein muß, daß er eine derartige Belastung überwinden kann. Hinzu kommt, daß die reibschlüssige Ankopplung des Fördergutträgers an das Antriebsband im Förderbetrieb stark von der Gewichtsbelastung des Fördergutträgers abhängt.

Zum Stand der Technik sogenannter Power-and-free-Fördersysteme mit Fördergutträgern, die sich im Staufalle gegenseitig freischalten können, wird ferner auf die US 4 058 064 verwiesen.

Der vorliegenden Erfindung liegt die Aufgabe zugrunde, einen gattungsgemäßen Fördergutträger für eine Fördereinrichtung mit Reibbandantrieb bereitzustellen, wobei die Trenneinrichtung des Fördergutträgers zum zeitweisen Lösen der Antriebsverbindung unabhängig von der Gewichtsbelastung durch das Fördergut zuverlässig funktioniert und mit einfachen Mitteln realisierbar ist.

Zur Lösung dieser Aufgabe wird erfindungsgemäß vorgeschlagen, daß bei dem Fördergutträger das Kopplungselement als Teil der Trenneinrichtung an einem Hebelarm eines an dem Trägerkörper um eine im wesentlichen vertikale Schwenkachse schwenkbar gelagerten zweiarmigen Hebels vorgesehen und durch Verschwenken des Hebels um die Schwenkachse zwischen einer Antriebsstellung zur Ankopplung an das Reibband und einer Neutralstellung zur Abkopplung vom Reibband bewegbar ist, wobei die Reibfläche bei in Antriebsstellung befindlichem Kopplungselement relativ zu dem Trägerkörper seitlich nach außen verlagert ist, und wobei der andere Hebelarm des Hebels als das Betätigungselement der Trenneinrichtung ausgebildet ist.

Im Gegensatz zu dem Fördergutträger nach dem Stand der Technik gemäß der EP 0 623 497 B1 muß der Fördergutträger nach der vorliegenden Erfindung zur Abkopplung vom Antriebsband nicht insgesamt quer zur Laufschiene bewegt werden, sondern im wesentlichen nur das Kopplungselement. Die Bewegung des Kopplungselements zwischen der Antriebsstellung und der Neutralstellung kann mit vergleichsweise kleinen und insbesondere definierten Kräften herbeigeführt werden, so daß im Falle eines Staus ein geringer Staudruck ausreicht, um den Fördergutträger zuverlässig vom Antriebsband abzukoppeln. Hierdurch wird ein störungsfreierer Betrieb einer mit den Fördergutträgern bestückten Fördereinrichtung erreicht. Die Trenneinrichtung lässt sich auf einfache Weise mit dem am Trägerkörper schwenkbar gelagerten zweiarmigen Hebel realisieren, der an einem Hebelarm das Kopplungselement aufweist und an seinem anderen Hebelarm im Falle eines Förderstaus von einem im Stau benachbarten Fördergutträger unter Staudruck betätigbar ist, um das Kopplungselement in die Neutralstellung zu schwenken.

Insbesondere im Zusammenhang mit dem Reibbandantrieb treten Vorteile der Erfindung deutlich in den Vordergrund. Die zuverlässige und rasche Abkopplung des Fördergutträgers von dem Reibband im Falle eines Staus stellt sicher, dass die Reibfläche geschont wird und dass eine übermäßige Erhitzung des Fördergutträgers und des Reibbandes vermieden wird. Da im Stau befindliche Fördergutträger nach der Erfindung nicht an dem weiterlaufenden Reibband schleifen, kann das Reibband mit einem relativ klein dimensionierten und preiswerten Antriebsmotor angetrieben werden.

Zweckmäßigerweise ist das Kopplungselement zur Antriebsstellung hin federnd vorgespannt, so daß es gegen die Federvorspannung, in die Neutralstellung zu bewegen ist. Die Vorspannung kann beispielsweise mittels einer einfachen Schraubenfeder aufgebracht werden. Durch entsprechende Wahl der Feder läßt sich die zum Freischalten des Fördergutträgers erforderliche Kraft sehr gut definieren.

Gemäß einer Weiterbildung der Erfindung weist die Trenneinrichtung ein Freischaltelement auf, das im Falle eines Förderstaus mit dem Betätigungselement eines im Stau unmittelbar benachbarten, gleichartigen Fördergutträgers in Eingriff treten kann, um dessen Kopplungselement in die Neutralstellung zu bewegen. Der Fördergutträger ist somit so beschaffen, daß er im Stau von einem benachbarten Fördergutträger automatisch freigeschaltet wird.

Im angetriebenen Zustand soll der Fördergutträger mit möglichst geringem Schlupf von dem Reibband mitgenommen werden. Um dies zu gewährleisten, wird vorgeschlagen, daß das Kopplungselement mit einem Gummibelag versehen ist, der die Reibfläche aufweist. ,

Gemäß einer besonders bevorzugten Ausführungsform der Erfindung ist an dem Trägerkörper wenigstens eine seitliche Stützrolle drehbar gelagert, mit der sich der Fördergutträger an einer vertikalen Seitenfläche einer jeweiligen Laufschiene der Fördereinrichtung seitlich abstützen kann.

Die Stützrolle sorgt dafür, daß der Fördergutträger unabhängig von seiner Gewichtsbelastung durch das zu transportierende Fördergut eine definierte Ausrichtung zur Laufschiene hat. Hierdurch ist sichergestellt, daß das Kopplungselement bei der Bewegung zwischen der Antriebsstellung und der Neutralstellung stets den gleichen Weg zurückzulegen hat und daß die von einer Feder aufgebrachte Anpreßkraft, die die Reibfläche auf das Reibband ausübt, und die zum Freischalten des Bügelträgers erforderliche Kraft sehr gut definiert sind.

Die Abstandshalter-Funktion der seitlichen Stützrollen kann in einer abgewandelten Ausführungsformein seitlich vom Trägerkörper abstehender Vorsprung erfüllen, der an einer betreffenden Anlagefläche der Laufschiene gleitet.

Ein Ausführungsbeispiel der Erfindung wird im folgenden unter Bezugnahme auf die Zeichnungen näher erläutert. Darin zeigt:

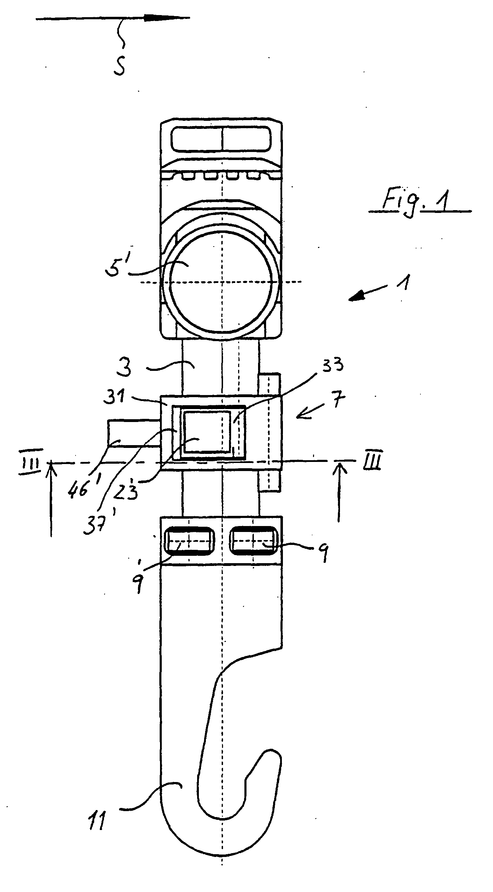

- Fig. 1: einen Fördergutträger nach der Erfindung in einer Seitenansicht, wobei die Antriebsrichtung mit einem Pfeil S gekennzeichnet ist;
- Fig. 2: den Fördergutträger nach Fig. 1 in Vorderansicht, wobei der Fördergutträger an einem Laufschienenprofil einer Hängefördereinrichtung hängend dargestellt ist;
- Fig. 3a: eine Schnittdarstellung des Fördergutträgers mit der in Fig. 1 bei III-III angedeuteten Schnittebene, wobei Einzelheiten der Trenneinrichtung mit in Antriebsstellung befindlichem Kopplungselement erkennbar sind;
- Fig. 3b: eine der Fig. 3a entsprechende Schnittansicht, wobei das betreffende Kopplungselement in der Neutralstellung gezeigt ist,
- Fig. 4: eine Gruppe von Fördergutträgern der in Fig. 1 dargestellten Art in einer Schnittansicht wie in den Fig. 3a und 3b bei Entstehung eines Förderstaus, und
- Fig. 5: eine Skizze zur Erläuterung von Kräfteverhältnissen zwischen einem Kopplungselement und einem Antriebsband.

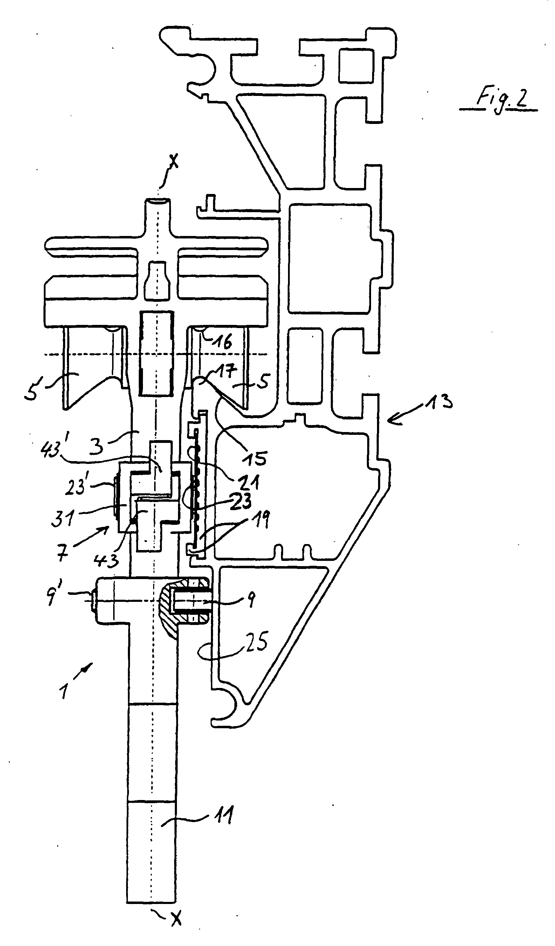

Bei dem in den Figuren gezeigten Fördergutträger handelt es sich um einen sog. Bügelträger 1, wie er beipielsweise in der Bekleidungsindustrie oder in Großwäschereien zum Transport von an Kleiderbügeln hängenden Kleidungsstücken in einer Hängefördereinrichtung verwendet werden kann. Der Bügelträger 1 ist im wesentlichen symmetrisch zu der in Fig. 2 angedeuteten vertikalen Mittenebene X-X aufgebaut und weist einen Trägerkörper 3, zwei seitlich davon abstehende und über eine gemeinsame Welle miteinander verbundene Laufrollen 5, 5', eine Trenneinrichtung 7, jeweils ein Paar seitlicher Stützrollen 9, 9' und einen unteren Haken 11 zum Einhängen von Kleiderbügeln oder dergl. auf.

Bei der in Fig. 2 gezeigten Anordnung des Bügelträgers 1 in einer Hängefördereinrichtung stützt sich der Bügelträger 1 mit jeweils einer seiner konischen Laufrollen 5, 5' an einer Lauffläche 15 der Laufschiene 13 ab, wobei die Lauffläche 15 eine der Kontur der Laufrolle 5 näherungsweise angepaßte Schräge hat. Der so seitlich an die Laufschiene 13 angehängte Bügelträger 1 wird somit an dem Laufflächenprofil der Laufschiene 13 zur Bewegung in Schienenlängsrichtung (in der Darstellung gemäß Fig. 2 in Richtung senkrecht zur Blattebene) geführt.

Unterhalb der in die Kehle 16 der Laufrolle 5 eingreifenden Spitze 17 des Laufflächenprofils ist eine Führung 19 vorgesehen, in der ein Reibband 21 für den Antrieb von Bügelträgern 1 längs der Schiene 13 verläuft. Bei dem Reibband 21 handelt es sich üblicherweise um ein Endlosband, das um Umlenktrommeln an betreffenden Umlenkstationen herumgeführt ist. Zum Antrieb des Bügelträgers 1 steht das Reibband 21 an seiner nach außen weisenden Flachseite mit einer Reibfläche 23 des Bügelträgers 1 reibschlüssig in Verbindung, so daß der Bügelträger 1 bei Bewegung des Reibbandes 21 längs der Laufschiene 13 von dem Reibband 21 mitgenommen wird.

Gemäß Fig. 2 stützt sich der Bügelträger 1 unterhalb des Reibbandantriebs 21, 23 mit seitlichen Stützrollen 9 an einer vertikalen Anlagefläche 25 der Laufschiene 13 seitlich ab. Wie in dem ausgebrochen dargestellten Bereich des Bügelträgers 1 erkennbar, sind die seitlichen Stützrollen 9 um eine vertikale Drehachse drehbar gelagert, so daß sie bei Bewegung des Bügelträgers 1 in Schienenlängsrichtung an der Anlagefläche 25 abrollen können.

Der Bügelträger 1 kann nach Drehung um 180° mit seiner in Fig. 2 links von der Mittenebene X-X liegenden Laufrolle 5' an die Laufschiene 13 angehängt werden, wobei aufgrund des symmetrischen Aufbaus das seitliche Stützrollenpaar 9' mit der Anlagefläche 25 und die Reibfläche 23' mit dem Reibband 21 in Kontakt kommen.

In Fig. 3a sind Einzelheiten der Trenneinrichtung 7 zu erkennen, die dazu dient, die Antriebsverbindung zwischen dem Reibband 21 und der betreffenden Reibfläche 23 bzw. 23' im Falle eines Staus von Fördergutträgern 1 an der Laufschiene 13 aufzuheben. Die Trenneinrichtung 7 weist zwei scherenartig an einem gemeinsamen Schwenkzapfen 27 um eine vertikale Achse schwenkbar gelagerte zweiseitige Hebel 29, 29' auf, die in einem am Trägerkörper 3 festgelegten Rahmen 31 angeordnet sind. Jeder der beiden Hebel 29, 29' weist ein Kopplungselement 33 bzw. 33' an einem Hebelarm auf, wobei die Kopplungselemente 33, 33' im wesentlichen symmetrisch zur Mittenebene X-X einander gegenüberliegen und an ihren in dem Rahmen 31 einander zugewandten Seiten durch eine Druckfeder 35 miteinander verbunden sind. Auf Grund der Vorspannung der Druckfeder 35 befinden sich die Kopplungselemente 33, 33' normalerweise in der in Fig. 3a gezeigten Stellung, in der sie mit ihren voneinander abgewandten Flächen 23, 23' durch ein jeweiliges Fenster 37, 37' des Rahmens 31 hindurch über die Seitenflächen 39, 39' des Rahmens 31 hinaus abstehen. Bei diesen Flächen 23, 23' handelt es sich um die Reibflächen 23, 23' des Bügelträgers 1, von denen jeweils eine - in Fig. 3a die Reibfläche 23 - mit dem bei 21 in Fig. 3a angedeuteten Reibband der Laufschiene in Reibkontakt steht, wenn der Bügelträger 1 in der in Fig. 2 gezeigten Weise an der Laufschiene 13 hängt.

An ihren voneinander abgewandten Außenseiten sind die Kopplungselemente 33, 33' mit Gummibelägen 41 versehen, die die Reibflächen 23, 23' aufweisen.

Solche Gummielemente 41 oder ähnliche elastische Elemente haben sich als besonders vorteilhaft erwiesen, da sie auch bei vergleichsweise geringem Anpreßdruck (Druck der Feder 35) eine zuverlässige Antriebskopplung zum Reibband 21 ermöglichen.

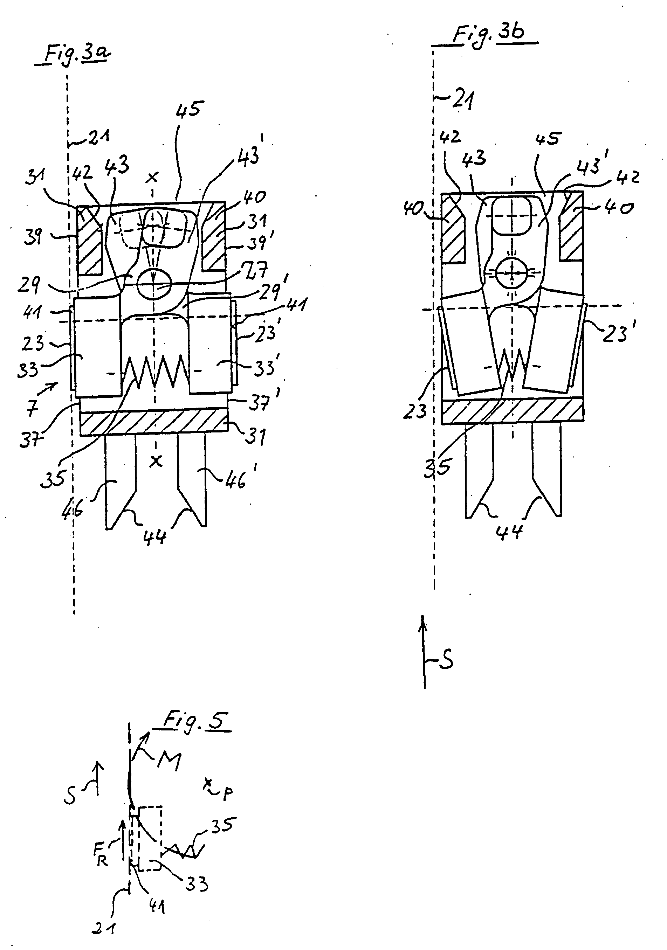

Die Kopplungselemente 33, 33' können aus ihrer hier als Antriebsstellung bezeichneten Schwenkstellung gemäß Fig. 3a heraus in die Neutratstellung gemäß Fig. 3b gegen die Rückstellkraft der Feder 35 verschwenkt werden, wobei sie aufeinander zu und dabei weiter in den Rahmen 31 hinein bewegt werden. Dabei kommt die betreffende Reibfläche 23 von dem Reibband 21 frei, so daß die Antriebsverbindung zwischen dem Bügelträger 1 und dem Reibband 21 bei weiterlaufendem Reibband 21 gelöst ist.

Das Verschwenken der Kopplungselemente 33, 33' in die Neutralstellung gemäß Fig. 3b erfolgt mittels der Hebelarme 43, 43', die in der in Fig. 2 erkennbaren Weise übereinander an dem gemeinsamen Schwenkzapfen 27 angeordnet sind, der an dem Trägerkörper 3 fixiert ist. Die freien Enden der Hebelarme 43, 43' sind von dem Fenster 45 des Rahmens 31 von außen her zugänglich, um die Hebel 29, 29' in die Stellung gemäß Fig. 3b zu verschwenken.

An der dem Fenster 45 entgegengesetzten Seite weist der Bügelträger 1 zwei nach außen abstehende Freischaltelemente 46, 46' auf, die im Falle eines Staus gleichartiger Bügelträger 1 in das entsprechende Fenster 45 des im Stau benachbarten Bügelträgers unter Wirkung des Staudrucks eindringen und dessen Hebelarme 43, 43' in die Stellung gemäß Fig. 3b verschwenken, um die Antriebsverbindung zum Reibband 21 zu lösen.

Die das Fenster 45 seitlich begrenzenden Wandbereiche 40 weisen schräge Einweisungsflächen 42 für betreffende Freischaltelemente 46, 46' eines im Stau benachbarten Bügelträgers 1 auf. Die Einweisungsflächen 42 sorgen dafür, daß die Freischaltelemente 46, 46' des betreffenden Bügelträgers 1 geführt in das Fenster 45 eindringen können, wobei die Freischaltelemente 46, 46' die Hebelarme 43, 43' zwischen sich in Eingriff nehmen. Die Schrägflächen 44 an den freien Enden der Freischaltelemente sorgen dafür, daß die in Eingriff genommenen Hebelarme 43, 43' in stetiger Weise in ihre der Neutralstellung entsprechende Position gedrückt werden.

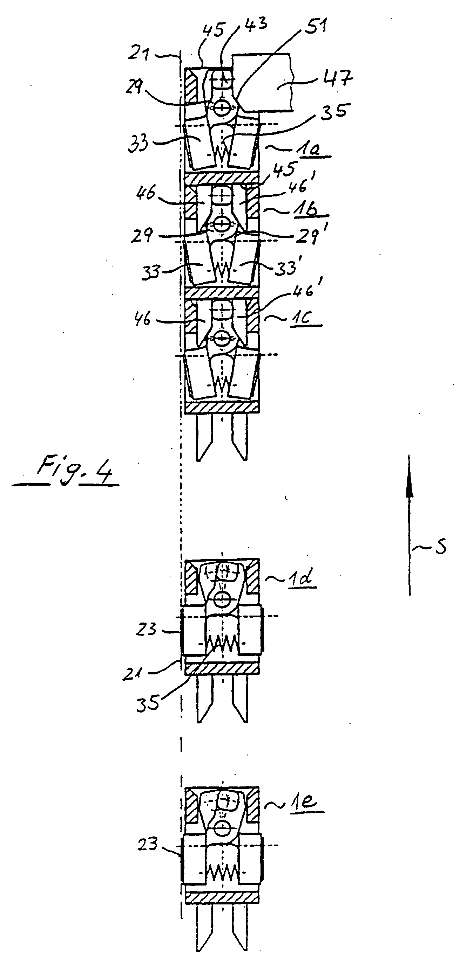

In Fig. 4 ist die Situation bei Aufbau eines Staus von 5 Bügelträgern 1a-1e in einem Staubereich der Fördereinrichtung illustriert.

Die Fördereinrichtung weist einen in Fig. 4 bei 47 angedeuteten Freischaltnocken auf, der zur Bildung eines Staus wahlweise in den Förderweg der Bügelträger 1 bewegbar ist. Nähert sich nun ein erster Bügelträger mit seinem in Förderrichtung nach vorn ausgerichteten Fenster 45 dem in Barrierestellung befindlichen Freischaltnocken 47, so kommt der Freischaltnocken 47 mit dem Hebel des mit dem Reibband 21 in Kontakt stehenden Kopplungselements 33 an dem Hebelarm 43 in Eingriff, wobei ein von dem Hebelarm 43 vertikal abstehender Stift (vgl. Fig. 2) der in Fig. 4 erkennbaren Schrägflächenbahn 51 des Freischaltnockens 47 folgt, so daß der Hebel 29 das Kopplungselement 33 zwangsweise in die Neutralstellung zwingt. In Fig. 4 ist der vom Freischaltnocken 47 gestoppte Bügelträger 1 a in dem Zustand dargestellt, in dem das Kopplungselement 33 vom Freischaltnocken 47 freigeschaltet worden ist. Der Bügelträger 1 b ist gemäß Fig. 4 auf den Bügelträger 1 a aufgefahren, wobei die Freischaltelemente 46, 46' des Bügelträgers 1a in das Fenster 45 des Bügelträgers 1 b eingedrungen sind und dabei die Hebel 29, 29' und die daran angeordneten Kopplungselemente 33, 33' des Bügelträgers 1 b in die Neutralstellung verschwenkt haben. In entsprechender Weise ist auch bereits der Bügelträger 1 c von den Freischaltelementen 46, 46' des Bügelträgers 1b freigeschaltet worden, so daß die bereits aufgestauten Bügelträger 1a-1c von dem Antriebsband 21 abgekoppelt sind.

Die Bügelträger 1 d und 1 e sind über ihre Reibflächen 23 mit dem Antriebsband 21 in Antriebsverbindung, so daß sie zu dem Stau hin bewegt und schließlich bei Erreichen des Staus von den Freischaltelementen 46, 46' des im Stau benachbarten Bügelträgers freigeschaltet werden.

Wird nun der Freischaltnocken 47 aus seiner Barrierestellung gemäß Fig. 4 entfernt, so kommen die Kopplungselemente 33, 33' des Bügelträgers 1 a aufgrund der Vorspannung der Druckfeder 35 aus ihrer Neutralstellung heraus, so daß das Kopplungselement 33 in Antriebsverbindung mit dem Antriebsband 21 kommt. Der Bügelträger 1 a wird somit weiterbewegt, wobei seine Freischaltelemente 46, 46' von dem Bügelträger 1 b freikommen, so daß auch dessen Kopplungselement 33 wieder in Antriebsverbindung mit dem Antriebsband 21 kommt. Auf diese Weise löst sich der Stau sukzessive auf.

Wie Fig. 2 erkennen läßt, ist der Bügelträger 1 so an die Laufschiene 13 angehängt, daß er mit seinen seitlichen Stützrollen 9 an der Anlagefläche 25 anliegt, wobei die Seitenstützrollen 9 an der Anlagefläche 25 abrollen können. Auf Grund der Abstützung des Bügelträgers 1 an der Anlagefläche 25 einerseits und dem Laufflächenprofil 15 andererseits wird erreicht, daß der Trägerkörper 3 eine gut definierte Lage relativ zur Laufschiene 13 mit geringer Pendelneigung aufweist. Diese gut definierte Position des Bügelträgers 1 relativ zur Laufschiene 13 ist im wesentlichen unabhängig davon, ob das betreffende Kopplungselement 33 in der Antriebsstellung oder in der Neutralstellung ist. Dies bedeutet auch, daß die Anpreßkraft der Reibfläche 23 (oder ggf. der Reibfläche 23') gegen das Reibband 21, insbesondere durch entsprechende Wahl der Spreizfeder 35 sehr gut definierbar ist. Es können daher leicht gleiche Antriebsverhältnisse bei einer Vielzahl von Bügelträgern nach der Erfindung in einer Fördereinrichtung realisiert werden, und zwar unabhängig von der jeweiligen Gewichtsbelastung der einzelnen Bügelträger an den Haken 11. Auf Grund der besser definierten und für alle angetriebenen Bügelträger näherungsweise gleichen Antriebsbedingungen wird ein störungsfreierer Betrieb einer betreffenden Fördereinrichtung als bisher gewährleistet.

Ein interessanter Gesichtspunkt betreffend die Kräfteverhältnisse zwischen dem Reibband 21 und dem in Antriebsstellung an dem Reibband 21 angekoppelten Kopplungselement 33 eines Fördergutträgers 1 ist in Fig. 5 schematisch angedeutet. Das in Richtung des Pfeils S bewegte Reibband und das bei 33 angedeutete Kopplungselement stehen reibschlüssig miteinander in Verbindung, wobei die Reibungskraft F_{R} dafür sorgt, daß der betreffende Fördergutträger vom Reibband 21 mitgenommen wird. Bei Ankopplung des Kopplungselementes 33 an das Reibband 21 kommt es aufgrund der Kraft F_{R} zu einem Moment in Bezug auf die Schwenkachse P des Kopplungselementes 33, wobei dieses bei M angedeutete Moment eine Verstärkung des Andrucks des Kopplungselements 33 gegen das Reibband 21 bewirkt. Dieser Momenteneffekt führt somit dazu, daß eine ausgezeichnete Kopplung zwischen dem Kopplungselement 33 und dem Reibband 21 hergestellt wird und der betreffende Bügelträger zuverlässig und schlupfarm vom Reibband 21 angetrieben wird.

Im Staubereich schalten sich die Bügelträger 1 gegenseitig zuverlässig frei, so daß die Reibflächen 23 der angehaltenen Bügelträger 1 dann nicht am Reibband 21 schleifen. Es wird daher an dem üblicherweise aus Stahl bestehenden Reibband 21 und an den gestauten Bügelträgern 1 kaum Reibungswärme erzeugt und Abrieb an den Reibflächen 23 vermieden.

## Patentansprüche

1. Fördergutträger zum Transport von Fördergut längs einer Förderstrecke in einer Fördereinrichtung, insbesondere Hänge-Fördereinrichtung, die Laufschienen (13) zur Führung von Fördergutträgern (1) und ein längs der Laufschienen (13) geführtes Antriebsband (21) in Form eines Reibbandes (21) zur Mitnahme der Fördergutträger (1) längs der Förderstrecke aufweist, wobei jeder Fördergutträger (1) einen Trägerkörper (3) und daran wenigstens eine seitlich abstehende Laufrolle (5) zur hängenden Abstützung und Führung des Fördergutträgers (1) an einer Laufprofilfläche (15) der Laufschienen (13) der Fördereinrichtung und ein mit dem Reibband (21) reibschlüssig in Antriebsverbindung zu bringendes Kopplungselement (33) aufweist, wobei eine Reibfläche (23) des mit seiner Laufrolle (5) an der Laufprofilfläche (15) hängend abgestützten Fördergutträgers (1) dem Reibband (21) gegenüberliegt, wobei die Fördergutträger (1) ferner in wenigstens einem Staubereich der Fördereinrichtung bei weiterlaufendem Reibband (21) staubar sind und jeweils eine unter Wirkung des Staudrucks aktivierbare Trenneinrichtung (7) zum zeitweisen Lösen der Antriebsverbindung aufweisen, und wobei die Trenneinrichtung (7) ein Betätigungselement (43) aufweist, das im Falle eines Förderstaus von einem im Stau benachbarten Fördergutträger unter Staudruck betätigbar ist, um die Antriebsverbindung zu lösen, **dadurch gekennzeichnet, dass** bei dem Fördergutträger (1) das Kopplungselement (33) als Teil der Trenneinrichtung (7) an einem Hebelarm eines an dem Trägerkörper (3) um eine im Wesentlichen vertikale Schwenkachse schwenkbar gelagerten zweiarmigen Hebels vorgesehen und durch Verschwenken des Hebels um die Schwenkachse zwischen einer Antriebsstellung zur Ankopplung an das Reibband (21) und einer Neutralstellung zur Abkopplung vom Reibband (21) bewegbar ist, wobei die Reibfläche (23) bei in Antriebsstellung befindlichem Kopplungselement (33) relativ zu dem Trägerkörper (3) seitlich nach außen verlagert ist, und wobei der andere Hebelarm (43) des Hebels als das Betätigungselement der Trenneinrichtung (7) ausgebildet ist.

2. Fördergutträger nach Anspruch 1, **dadurch gekennzeichnet, dass** das Kopplungselement (33) zur Antriebsstellung hin federnd vorgespannt ist.

3. Fördergutträger nach Anspruch 1 oder 2, **dadurch gekennzeichnet, dass** die Trenneinrichtung (7) ein Freischaltelement (46) aufweist, das im Falle eines Förderstaus mit dem Betätigungselement (43) eines im Stau unmittelbar benachbarten gleichartigen Fördergutträgers (1) in Eingriff treten kann, um dessen Kopplungselement in die Neutralstellung zu bewegen.

4. Fördergutträger nach einem der vorhergehenden Ansprüche, **dadurch gekennzeichnet, dass** an dem Trägerkörper (3) wenigstens eine seitliche Stützrolle (9) drehbar gelagert ist, mit der sich der Fördergutträger (1) an einer vertikalen Seitenfläche (25) einer jeweiligen Laufschiene (13) der Fördereinrichtung seitlich abstützen kann.

5. Fördergutträger nach einem der vorhergehenden Ansprüche, **dadurch gekennzeichnet, dass** das Kopplungselement (33) mit einem Gummibelag (41) versehen ist, der die Reibfläche (23) aufweist, mit der der Fördergutträger mit dem Reibband (21) in Antriebsverbindung zu bringen ist.

## Claims

1. Conveyable-article carrier for conveying articles along a conveying section in a conveying device, in particular a suspended conveying device, comprising running rails (13) for guiding conveyable-article carriers (1) and a drive belt (21) in the form of a frictional belt (21), guided along the running rails (13), for entraining the conveyable-article carrier (1) along the conveying section, each conveyable-article carrier (1) comprising a carrying body (3) and at least one laterally protruding roller (5) thereon for suspended support and guidance of the conveyable-article carrier (1) on a running profile surface (15) of the running rails (13) of the conveying device and a coupling element (33) to be brought frictionally into drive connection with the frictional belt (21), a frictional surface (23) of the conveyable-article carriers (1) supported by suspension with its roller (5) on the running profile surface (15) opposing the frictional belt (21), wherein the conveyable-article carrier (1) can also be subject to build-up in at least one build-up region of the conveying device when the frictional belt (21) continues to run and comprise a separating device (7) actuable in each case under the influence of the build-up pressure for temporary cancellation of the drive connection, and the separating device (7) comprising an actuating element (43) which, in a build-up, can be actuated by an adjacent conveyable-article carrier by build-up pressure to cancel the drive connection, **characterised in that** in the conveyable-article carrier (1) the coupling element (33) is provided as part of the separating device (7) on a lever arm of a two-armed lever pivotally mounted about a substantially vertical pivot axis on the carrier body (3), and by pivoting the lever about the pivot axis can be moved between a drive position for coupling to the frictional belt (21) and a neutral position for decoupling from the frictional belt (21), the frictional surface (23) being displaced laterally outwardly, relative to the carrier body (3), when the coupling element (33) is in the drive position, and the other lever arm (43) of the lever being designed as the actuating element of the separating device (7).

2. Conveyable-article carrier according to claim 1, **characterised in that** the coupling element (33) is prestressed resiliently in the direction of the drive position.

3. Conveyable-article carrier according to claim 1 or 2, **characterised in that** the separating device (7) has a disconnecting element (46) which, in a build-up, can pass into engagement with the actuating element (43) of a similar, directly adjacent conveyable-article carrier (1) to move the coupling element thereof into the neutral position.

4. Conveyable-article carrier according to any of the preceding claims, **characterised in that** at least one lateral supporting roller (9) is rotatably mounted on the carrier body (3), with which roller the conveyable-article carrier (1) can be laterally supported on a vertical lateral face (25) of a respective running rail (13) of the conveying device.

5. Conveyable-article carrier according to any of the preceding claims, **characterised in that** the coupling element (33) is provided with a rubber coating (41) comprising the frictional surface (23), with which the conveyable-article carrier is to be brought into drive connection with the frictional belt (21).

## Revendications

1. Support de marchandises de convoyage pour le transport de marchandises de convoyage le long d'une voie de convoyage dans un dispositif de convoyage, en particulier un dispositif de convoyage suspendu, qui présente des rails de roulement (13) pour guider les supports de marchandises de convoyage (1) et un tapis d'entraînement (21) de la forme d'un tapis à friction (21) guidé le long des rails de roulement (13) pour entraîner les supports de marchandises de convoyage (1) le long de la voie de convoyage, chaque support de marchandises de convoyage (1) présentant un corps support (3) et sur celui-ci au moins un rouleau de roulement (5) en saillie latérale pour soutenir de manière suspendue et guider le support de marchandises de convoyage (1) sur une surface de profil de roulement (15) des rails de roulement (13) du dispositif de convoyage et un élément d'accouplement (33) destiné à être mis en prise d'entraînement par friction avec le tapis de friction (21), une surface de friction (23) du support de marchandises de convoyage (1) soutenu de manière suspendue par son rouleau de roulement (5) à la surface de profil de roulement (15) étant opposée au tapis de friction (21), les supports de marchandises de convoyage (1) étant de plus accumulables dans au moins une zone d'accumulation pendant que le tapis de fiction (21) continue de tourner et présentent chacun un dispositif de séparation (7) activable sous l'effet de la pression d'accumulation pour libérer temporairement la liaison d'entraînement, et dans lequel le dispositif de séparation (7) présentant un élément d'actionnement (43) qui, dans le cas d'une accumulation de convoyage, peut être actionné par un support de marchandises de convoyage voisin dans l'accumulation sous l'effet de la pression d'accumulation, afin de libérer la liaison d'entraînement, **caractérisé en ce que** sur le support de marchandises de convoyage (1), l'élément d'accouplement (33) est prévu en tant que partie du dispositif de séparation (7) sur un bras de levier d'un levier à deux bras monté sur le corps support (3) de manière pivotante autour d'un axe de pivotement sensiblement vertical et est mobile par pivotement du levier autour de l'axe de pivotement entre une position d'entraînement pour l'accouplement au tapis de friction (21) et une position neutre pour le découplage depuis le tapis de friction (21), la surface de friction (23) étant déplacée latéralement vers l'extérieur par rapport au corps support (3) quand l'élément d'accouplement (33) se trouve dans la position d'entraînement, et l'autre bras de levier (43) du levier étant conformé en élément d'actionnement du dispositif de séparation (7).

2. Support de marchandises de convoyage selon la revendication 1, **caractérisé en ce que** l'élément d'accouplement (33) est précontraint de manière élastique en direction de la position d'entraînement.

3. Support de marchandises de convoyage selon la revendication 1 ou 2, **caractérisé en ce que** le dispositif de séparation (7) présente un élément de libération (46) qui, dans le cas d'une accumulation de convoyage, peut entrer en prise avec l'élément d'actionnement (43) d'un support de marchandises de convoyage (1) de même type directement voisin dans l'accumulation, afin de déplacer son élément de convoyage dans la position neutre.

4. Support de marchandises de convoyage selon l'une des revendications précédentes, **caractérisé en ce que** sur le corps support (3) est monté rotatif au moins un rouleau d'appui latéral (9) avec lequel le support de marchandises de convoyage (1) peut s'appuyer latéralement contre une surface latérale verticale (25) d'un rail de roulement (13) respectif du dispositif de convoyage.

5. Support de marchandises de convoyage selon l'une des revendications précédentes, **caractérisé en ce que** l'élément d'accouplement (33) est muni d'une garniture en caoutchouc (41) qui présente la surface de friction (23) avec laquelle le support de marchandises de convoyage peut être mis en liaison d'entraînement avec le tapis de friction (21).
